# DEMANDE DE BREVET EUROPEEN

(11) **EP 1 249 628 A1**
(43) Date de publication de la demande: **16.10.2002**
(21) Numéro de dépôt: 02290886.7
(22) Date de dépôt: 09.04.2002
(51) Int. Cl.: F16D 48/06

(54) **Système de commande électrique d'un embrayage de véhicle automobile**

(30) Priorité: 09.04.2001 FR 0104797
(71) Demandeur: Peugeot Citroen Automobiles SA, 92200 Neuilly sur Seine (FR)
(72) Inventeur: Sauvonnet, Franck, 94120 Fontenay sous Bois (FR)
(74) Mandataire: Thinat, Michel

(57) **Abrégé**

La présente invention concerne un système de commande électrique d'un embrayage de véhicule automobile.

Le système est caractérisé en ce qu'il comprend un circuit électronique (12, 13, 14, 15, 17, 18), pouvant être intégré au calculateur (9), et apte à détecter une couple résistant, un capteur permettant de fournir au calculateur (9) un signal électrique représentatif de la course de la butée d'embrayage pour permettre à ce calculateur (9) de déterminer les points de débrayage et de ré-embrayage définis en fonction de la course de la butée d'embrayage et à placer ces deux points sur une courbe mémorisée dans le calculateur représentatif d'une loi de commande entre les pédales de débrayage et la butée de débrayage pour assurer un dosage optimal du couple transmis aux roues du véhicule.

L'invention trouve application dans le domaine de l'automobile.

## Description

La présente invention concerne un système de commande électrique d'un embrayage de véhicule automobile.

Dans les systèmes de débrayage classiques utilisés dans les véhicules automobiles, la pédale de débrayage agit, par l'intermédiaire d'un câble ou hydrauliquement, sur une fourchette de déplacement d'une butée d'embrayage faisant partie du mécanisme d'embrayage. Ces systèmes connus nécessitent des moyens permettant de rattraper les jeux et l'usure engendrés dans la commande du mécanisme d'embrayage et dans ce dernier, tels que par exemple un dispositif de rattrapage automatique, un ressort de rappel ou autres.

On connaît également un système de commande électrique d'un embrayage du véhicule automobile comprenant notamment un calculateur permettant de piloter un actionneur de débrayage qui commande la fourchette de déplacement de la butée d'embrayage du mécanisme d'embrayage. Ce système de commande permet de simplifier l'interface entre conducteur et mécanisme d'embrayage de façon de permettre au conducteur de réduire les efforts et les courses à la pédale de débrayage tout en lui permettant de maîtriser le couple transmis aux roues du véhicule.

Cependant, la gestion par le calculateur des phases de débrayage et de ré-embrayage est fonction de l'usure du mécanisme d'embrayage, de la dilatation des pièces de ce mécanisme en fonction de la température, du régime moteur et de la vitesse de débrayage liée au conducteur du véhicule.

La présente invention a pour but d'éliminer les inconvénients ci-dessus des systèmes connus en proposant un système de commande électrique d'un embrayage de véhicule automobile, comprenant un calculateur relié à un capteur de déplacement d'une pédale ou d'une palette de débrayage et permettant de piloter un actionneur de débrayage commandant une fourchette de déplacement d'une butée d'embrayage du mécanisme d'embrayage, et qui est caractérisé en ce qu'il comprend un circuit électronique, pouvant être intégré au calculateur, apte à détecter un couple résistant correspondant à un début ou une fin de frottement du mécanisme d'embrayage suivant le sens de déplacement, débrayage ou ré-embrayage, de la pédale ou de la palette tel que déterminé par le capteur de déplacement ; un autre capteur permettant de fournir au calculateur un signal électrique représentatif de la course de la butée d'embrayage, de façon à permettre au calculateur de déterminer le point de débrayage et le point de ré-embrayage définis en fonction de la course de la butée d'embrayage et à placer ces deux points ainsi déterminés sur une courbe mémorisée dans le calculateur représentative d'une loi de commande entre la pédale ou la palette de débrayage et la butée d'embrayage, assurant ainsi un dosage optimal du couple transmis aux roues du véhicule.

De préférence, le circuit électronique comprend un soustracteur effectuant une différence entre un signal représentatif du couple réel du moteur et un signal représentatif du couple résistant, un diviseur relié en sortie du soustracteur permettant de calculer une accélération estimée obtenue par division de la différence entre couples réel et résistant par l'inertie du moteur en rotation, un intégrateur relié en sortie du diviseur pour fournir un signal relatif au régime estimé du moteur, un comparateur comparant le régime estimé du moteur au régime réel de celui-ci pour fournir un écart de régime appliqué à un amplificateur, dont la sortie est reliée au soustracteur pour lui fournir la valeur du couple résistant et un filtre passe-haut de détection d'un signal du couple résistant fourni au calculateur.

Le comparateur reçoit le signal du régime réel du moteur d'un capteur de vitesse de rotation de l'arbre vilebrequin du moteur et le couple réel du moteur est déterminé à partir de ce capteur.

Le calculateur est disposé entre le compartiment du moteur du véhicule et l'habitacle de celui-ci.

Selon une variante, le calculateur est celui utilisé habituellement pour gérer le fonctionnement du moteur.

La loi de commande peut être utilisée pour différents types d'embrayage.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- La figure 1 est un schéma synoptique fonctionnel du système de commande électrique d'un embrayage pour véhicule automobile conforme à l'invention ;
- La figure 2 représente le schéma électronique d'un circuit associé au calculateur de débrayage de la figure 1 pour détecter un couple résistant ;
- Les figures 3A à 3D représentent différentes courbes relatives au fonctionnement du calculateur pour déterminer le point de débrayage ;
- Les figures 4A à 4D représentent différentes courbes de fonctionnement du calculateur pour déterminer le point de ré-embrayage ; et
- La figure 5 représente une courbe relative à la loi de commande entre la pédale de débrayage et la butée d'embrayage du mécanisme d'embrayage du véhicule.

Le système de commande électrique d'embrayage ou de débrayage d'un véhicule automobile comprend un module 1 dit de pédale de débrayage comportant, schématisés sous forme de blocs, une pédale de débrayage 2 sur laquelle peut agir le conducteur pour débrayer ou ré-embrayer l'embrayage du véhicule, un capteur de déplacement 3 fournissant un signal électrique représentatif du déplacement angulaire α de la pédale de débrayage 2 et un restituteur d'effort 4 à la pédale de débrayage 2.

La pédale de débrayage peut être remplacée par une palette, connue en soi, située sur le volant de direction du véhicule pour permettre au conducteur de commander manuellement à partir du volant les phases de débrayage et de ré-embrayage.

Le mécanisme d'embrayage 5 comprend, de façon connue en soi et schématisés sous forme de blocs, la fourchette de débrayage 6 commandant le déplacement de la butée d'embrayage 7 permettant de déplacer un plateau de pression pour appliquer les uns contre les autres des disques d'embrayage 8 dans le cas d'un embrayage à friction.

Un calculateur 9 reçoit le signal de sortie provenant du capteur de déplacement 3 et commande électriquement un actionneur de débrayage 10 pilotant la fourchette 6 du mécanisme d'embrayage 5. L'actionneur de débrayage 10, connu en soi, et le calculateur d'embrayage 9 sont alimentés par une source d'alimentation 11, telle que la batterie du véhicule.

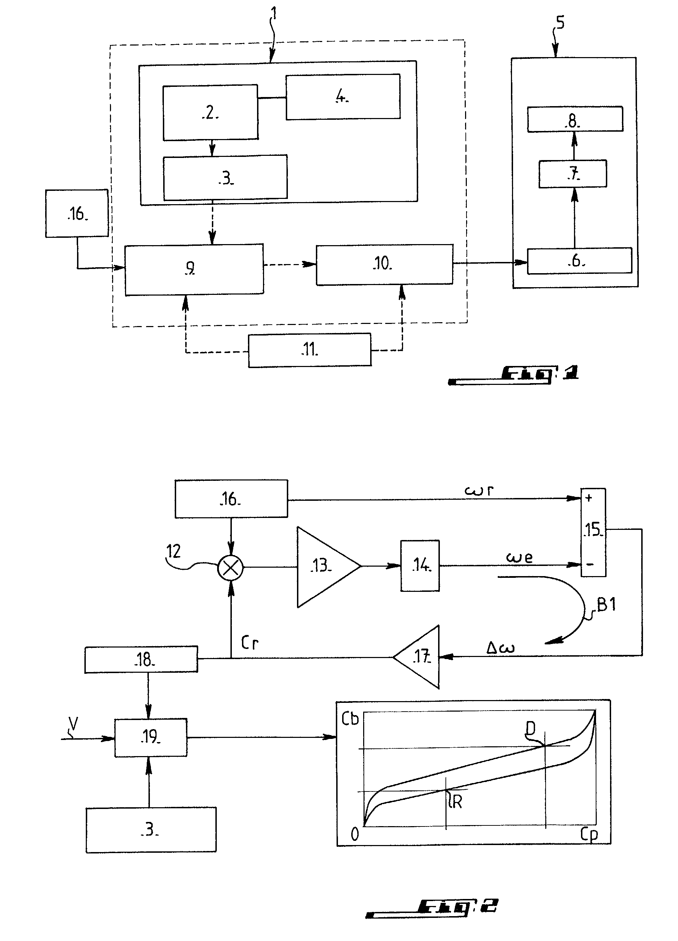

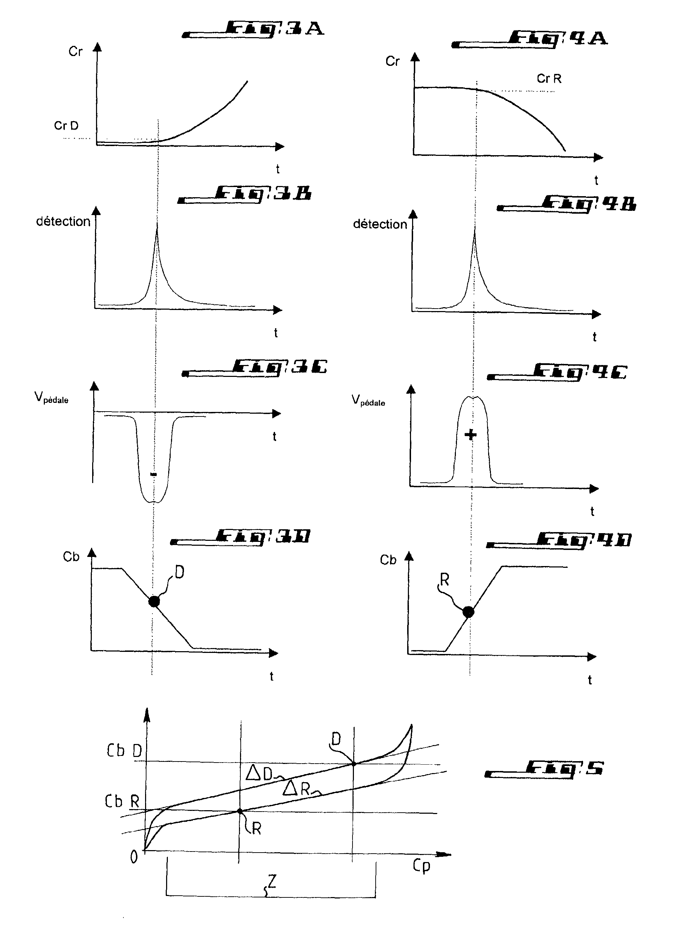

Selon l'invention, le calculateur de débrayage 9 comprend un circuit électronique, représenté en figure 2, et permettant en liaison avec le calculateur 9 de gérer, par une loi de commande entre la pédale de débrayage 2 et la butée 7 du mécanisme d'embrayage, le couple transmis aux roues du véhicule en ayant la meilleure dosabilité possible.

Pour cela, le circuit électronique comprend un soustracteur 12 recevant à l'une de ses entrées un signal électrique représentatif du couple réel du moteur et à son autre entrée un signal électrique relatif au couple résistant déterminé comme on le verra ultérieurement. Le soustracteur 12 permet d'effectuer la différence entre le couple réel du moteur et le couple résistant.

Cette différence est appliquée à l'entrée d'un diviseur 13 qui permet de calculer et de fournir à sa sortie un signal représentatif d'une accélération. Ce calcul est effectué en divisant la différence de couples qu'il reçoit à son entrée par l'inertie du moteur en rotation (masse de l'équipage mobile).

La sortie du diviseur 13 est reliée à l'entrée d'un intégrateur 14 intégrant le signal d'accélération du diviseur 13 pour obtenir à sa sortie un signal relatif au régime estimé (vitesse de rotation) du moteur appliqué à l'entrée d'un comparateur 15 permettant de comparer ce régime estimé ωₑ au régime réel ωᵣ du moteur obtenu à partir d'un capteur de vitesse de rotation de l'arbre vilebrequin du moteur, capteur faisant partie d'un bloc 16 de capteur du véhicule.

C'est à partir de ce bloc de capteurs 16 qu'est également fourni au soustracteur 12 le couple réel du moteur.

La sortie du comparateur 15 est reliée à l'entrée d'un amplificateur 17 permettant d'amplifier d'un facteur Kₑ l'écart ou erreur de vitesse Δω du comparateur 15. Le facteur Kₑ est un élément d'accord réglable.

La sortie de l'amplificateur 17 est relié à l'autre entrée du soustracteur 12 de façon à former une boucle de rétroaction B1 effectuant des calculs pour minimiser l'erreur Δω et la faire ainsi tendre vers 0.

La sortie de l'amplificateur 17 est également reliée à un filtre passe-haut 18 fournissant au microprocesseur 19 du calculateur 9 un signal de détection d'un couple résistant.

Le circuit électronique décrit ci-dessus a été représenté comme faisant partie du calculateur 9, mais il est bien entendu qu'il peut être indépendant de celui-ci. En outre, le calculateur 9 peut être celui habituellement utilisé pour gérer le fonctionnement du moteur d'un véhicule. Le calculateur 9 peut être déposé entre le compartiment du moteur du véhicule et l'habitacle de ce dernier.

Au microprocesseur 19 du calculateur 9 sont également appliqués le signal du capteur 3 permettant d'indiquer au microprocesseur le sens de déplacement de la pédale ou de la palette de débrayage et la vitesse du véhicule.

Le fonctionnement du circuit électronique ressort déjà de la description qui précède et va être maintenant brièvement expliqué.

Le comparateur 15 compare les régimes de rotation réel et estimé de l'arbre vilebrequin du moteur et, à partir de cette différence de régimes du moteur, fournit, par l'intermédiaire de l'amplificateur 17, un signal relatif à la valeur du couple résistant Cr. Ce couple est croissant en fonction du temps pour la phase de débrayage comme représenté en figure 3A et est décroissant en fonction du temps pour la phase de ré-embrayage comme représenté en figure 4A. Le filtre passe-haut 18 détecte le couple résistant CrD comme représenté en figure 3B et, ensuite, le couple résistant CrR comme représenté en figure 4B, couple résistant correspondant à un début ou une fin de frottement du mécanisme d'embrayage et appelé plus communément "point de léchage".

Le sens de déplacement de la pédale de débrayage ou de la palette est déterminé par le capteur 3. Ainsi, comme représenté en figure 3C, l'enfoncement de la pédale pour la phase de débrayage est négatif alors que, comme représenté en figure 4C, le sens de déplacement de cette pédale dans la phase de ré-embrayage est positif. De la sorte, le calculateur 9 peut déterminer le sens de déplacement de la pédale de débrayage 2.

Un capteur (non représenté) situé sur le récepteur de la commande d'embrayage permet d'obtenir la course de la butée d'embrayage Cb indiquée en figure 3D pour la phase de débrayage et en figure 4D pour la phase de ré-embrayage. Le signal de sortie de ce capteur est fourni au microprocesseur 19 du calculateur 9 qui permet d'obtenir, à partir de la courbe des figures 3A à 3D ou des courbes des figures 4A à 4D le point de débrayage D et le point de ré-embrayage R définis en fonction de la course Cb de la butée d'embrayage 7 comme indiqué respectivement aux figures 3D et 4D.

Le cahier des charges relatif à la pédale de débrayage, ou à la palette de débrayage, définit une position des points D et R en fonction de la course de la pédale Cp correspondant pour le conducteur à un maximum de confort de conduite.

Les points D et R recalculés, à chaque fois que la pédale de débrayage est enfoncée, par le circuit de la figure 2 et à partir des courbes des figures 3A à 3D et 4A à 4D, sont ensuite définis par l'intersection des deux droites y=Cb pour la phase de débrayage et la phase de ré-embrayage avec les lieux x des points situés sur une zone de dosabilité Z comme représenté en figure 5 et ces deux points peuvent être placés dans le graphe de la figure 5 représentant la loi de commande entre la course de la pédale de débrayage Cp et la course de la butée d'embrayage Cb.

Cette loi de commande est telle que par les deux points D et R passent respectivement deux segments de pentes respectives ΔD et ΔR caractérisant la zone de dosabilité permettant de garantir, pour des efforts et des courses réduits, un dosage convenable au ré-embrayage, c'est-à-dire qu'il est possible de maîtriser le couple transmis aux roues du véhicule en garantissant au conducteur d'excellents débrayage et ré-embrayage tout en lui offrant une meilleure ergonomie posturale et une meilleure ergonomique énergétique par rapport aux systèmes classiques de commande de débrayage.

Un autre avantage du système de l'invention est de garantir constante, pour le conducteur, les positions des points D et R sur la course de la pédale de débrayage, ou de la palette de débrayage, quel que soit l'état du mécanisme d'embrayage et de sa commande. Autrement dit, le système permet de maîtriser les points D et R de débrayage et de ré-embrayage en fonction de l'usure du mécanisme d'embrayage, de la dilatation des pièces en fonction de la température du moteur, du régime moteur et de la vitesse du débrayage liée au conducteur du véhicule.

En outre, le système de l'invention permet de réduire les à-coups du moteur et de standardiser par la loi de commande la zone dosabilité pour différents embrayages de véhicules automobiles.

Le système de l'invention permet d'auto-ajuster, par l'intermédiaire du calculateur, la consigne à fournir à l'actionneur de débrayage en tenant compte de la localisation des points D et R de débrayage et de ré-embrayage.

## Revendications

1. Système de commande électrique d'un embrayage de véhicule automobile, comprenant un calculateur (9) relié à un capteur (3) de déplacement d'une pédale ou d'une palette de débrayage (2) et permettant de piloter un actionneur de débrayage (10) commandant une fourchette (6) de déplacement d'une butée d'embrayage (7) du mécanisme d'embrayage (5), **caractérisé en ce qu'**il comprend un circuit électronique (12, 13, 14, 15, 17, 18), pouvant être intégré au calculateur (9), apte à détecter un couple résistant correspondant à un début ou une fin de frottement du mécanisme d'embrayage (5) suivant le sens de déplacement, débrayage ou ré-embrayage, de la pédale ou de la palette (2) tel que déterminé par le capteur de déplacement (3), un autre capteur permettant de fournir au calculateur (9) un signal électrique représentatif de la course de la butée d'embrayage (7), de façon à permettre au calculateur (9) de déterminer le point de débrayage et le point de ré-embrayage définis en fonction de la course de la butée d'embrayage (7) et à placer ces deux points (D, R) ainsi déterminés sur une courbe mémorisée dans le calculateur représentative d'une loi de commande entre la pédale ou la palette de débrayage (2) et la butée d'embrayage (7), assurant un dosage optimal du couple transmis aux roues du véhicule.

2. Système selon la revendication 1, **caractérisé en ce que** le circuit électronique comprend un soustracteur (12) effectuant une différence entre un signal représentatif du couple réel du moteur et un signal représentatif du couple résistant, un diviseur (13) relié en sortie du soustracteur (12) permettant de calculer une accélération estimée obtenue par division de la différence entre couples réel et résistant par l'inertie du moteur en rotation, un intégrateur (14) relié en sortie du diviseur (13) pour fournir un signal relatif au régime estimé du moteur, un comparateur (15) comparant le régime estimé du moteur au régime réel de celui-ci pour fournir un écart de régime appliqué à un amplificateur (17), dont la sortie est reliée au soustracteur (12) pour lui fournir la valeur du couple résistant et à un filtre passe-haut (18) de détection d'un signal du couple résistant fourni au calculateur (9).

3. Système selon la revendication 2, **caractérisé en ce que** le comparateur (15) reçoit le signal du régime réel du moteur d'un capteur de vitesse de rotation de l'arbre vilebrequin du moteur et le couple réel du moteur est déterminé à partir de ce capteur.

4. Système selon l'une des revendications 1 à 3, **caractérisé en ce que** le calculateur (9) est disposé entre le compartiment du moteur du véhicule et l'habitacle de celui-ci.

5. Système selon l'une des revendications 1 à 3, **caractérisé en ce que** le calculateur (9) est celui utilisé pour gérer le fonctionnement du moteur.

6. Système selon l'une des revendications précédentes, **caractérisé en ce que** la loi de commande peut être utilisée pour différents types d'embrayage.
